# EUROPÄISCHE PATENTANMELDUNG

(11) **EP 3 913 567 A1**
(43) Veröffentlichungstag der Anmeldung: **24.11.2021**
(21) Anmeldenummer: 21020263.6
(22) Anmeldetag: 19.05.2021
(51) Int. Cl.: G06Q 50/16, G06Q 40/06

(54) **SERVER-COMPUTERSYSTEM SOWIE BEWERTUNGSVERFAHREN**

(30) Priorität: 19.05.2020 DE 202020102851 U; 07.07.2020 EP 20020313
(71) Anmelder: Realty View GbR, 59939 Olsberg (DE)
(72) Erfinder: Schmidt, Ralf, 59939 Olsberg (DE); Krell, Roger, 33102 Paderborn (DE); Lu, Nhiem, 44388 Dortmund (DE); Pietsch, Wolf-Rüdiger, 33161 Hövelhof (DE)
(74) Vertreter: Ostermann, Thomas

(57) **Zusammenfassung**

Die Erfindung betrifft ein System zum automatischen Bereitstellen von Informationen über ein Anlageobjekt mit einer Datenbank zur Speicherung von Daten, einem vernetzten Immobilien-Informationsmodul zum Bereitstellen von marktbezogenen Daten, ein Bewertungsmodul zum Bereitstellen von Bewertungsinformationen bezüglich des Anlageobjektes, dadurch gekennzeichnet, dass sich das Bewertungsmodul aus einem statischen Bewertungsmodul und einem dynamischen Bewertungsmodul zusammensetzt, wobei das statische Bewertungsmodul Bewertungsinformationen auf Basis von bestandsbezogenen Daten und wobei das dynamische Bewertungsmodul Bewertungsinformationen auf Basis von marktbezogenen Daten bereitstellt, dass ein KI-Modul vorgesehen ist enthaltend einen Algorithmus, mittels dessen eine Ähnlichkeitsprüfung unter Kategorisierung der bestandsbezogenen Daten und der marktbezogenen Daten und eine Vergleichsprüfung durchführbar ist, so dass bei Überschreitung der Abweichung eines bewertungsrelevanten Kategoriewertes des einen Anlageobjektes zu dem bewertungsrelevanten Kategoriewertes eines anderen Anlageobjektes ein Aktionssignal erzeugt wird.

## Beschreibung

Die Erfindung betrifft ein Server-Computersystem.

Ferner betrifft die Erfindung ein Verfahren zum Bewerten von Anlageobjekten, wobei in einem Rechnersystem ein Bewertungsergebnis in Abhängigkeit von bestandsbezogenen Daten des Anlageobjektes, die sich aus zeitlich unveränderlichen Informationen zusammensetzen, und von marktbezogenen Daten, die sich aus zeitlich veränderlichen Informationen zusammensetzen, des Anlageobjektes ermittelt wird.

Ferner betrifft die Erfindung eine Bewertungsplattform für Anlageobjekte.

Aus der DE 20 2012 013 280 U1 ist ein System zum automatischen Bereitstellen von Informationen über ein Anlageobjekt bekannt, das eine Datenbank zur Speicherung von Daten des Anlageobjektes, ein vernetztes Informationssystem zum Bereitstellen von externen Daten sowie ein Bewertungsmodul zum Bereitstellen von Bewertungsinformationen bezüglich des Anlageobjektes umfasst. Das Bewertungsmodul ermöglicht die Wertbestimmung des Anlageobjektes basierend auf einer Analyse des Verkaufs vergleichbarer Anlageobjekte. Das Bewertungsmodul ermittelt die Bewertungsinformation in Abhängigkeit von dem Grad einer Benutzeraktivität, d. h. wie oft ein bestimmtes Anlageobjekt in einer Ergebnisliste für eine Anlage-Objekt-Suchanfrage in einem Informationssystem genannt ist. Handelt es sich bei der Bewertungsinformation um den Preis des Anlageobjektes, ist dieser abhängig von einer Popularität eines Online-Anlageobjektangebots. Die Bewertungsinformation bzw. der Preis bestimmt sich insofern in Abhängigkeit von der Benutzeraktivität, insbesondere Gesamtzeit der Verweilzeit von Benutzern auf dem Online-Anlageobjektangebot, eine Anzahl von Anfragen zum Besichtigen des Anlageobjektes etc. Bei dem bekannten System handelt es sich somit um die Bereitstellung von Bewertungsinformationen von zum Verkauf angebotenen Anlageobjekten des Immobilienmarktes. Wünschenswert ist es jedoch, ein Bewertungsmodul vorzusehen, das eine Bewertung von in einem Bestand eines Immobilienportfolios befindlichen Anlageobjekten ermöglicht.

Aus der DE 10 2010 028 515 A1 ist ein Bewertungssystem sowie Bewertungsverfahren für Anlageobjekte bekannt, mittels dessen ein Bewertungsergebnis in Abhängigkeit von bestandsbezogenen Daten und marktbezogenen Daten des Anlageobjektes ermittelt werden. Die bestandsbezogenen Daten beziehen sich auf zeitlich unveränderliche Informationen, wie Grundstücksgröße, Baujahr des Anlageobjektes. Die marktbezogenen Daten beziehen sich auf zeitlich veränderliche Informationen zu dem Anlageobjekt, wie beispielsweise die Bevölkerungsstruktur oder die Wirtschaftskraft, in dem sich das Anlageobjekt befindet. Das ermittelte Bewertungsergebnis kann beispielsweise ein Marktwert des Anlageobjektes sein, so dass der Nutzer eine fundierte Basis für Verkaufsverhandlungen des Anlageobjektes hat. Das Fachwissen bzw. die Einschätzung von marktbezogenen Daten durch den Nutzer bleiben hierbei unberücksichtigt.

Aufgabe der vorliegenden Erfindung ist es daher, ein System zum automatischen Bereitstellen von Informationen über ein Anlageobjekt sowie ein Bewertungsverfahren und eine Plattform derart anzugeben, dass ein effektives Portfoliomanagement für ein IT-gestütztes Immobilienportfolio bereitgestellt wird, wobei eine strategische Entscheidungshilfe für Maßnahmen der in einem Immobilienbestand befindlichen Anlageobjekten ermöglicht wird.

Zur Lösung dieser Aufgabe weist die Erfindung die Merkmale des Patentanspruchs 1 auf.

Nach der Erfindung ist ein Künstliche-Intelligenz-Computersystem in einem Server-Computersystem integriert, so dass auf Basis von bestandsbezogenen Daten und marktbezogenen Daten eine aktuelle und zuverlässige Bewertung von Anlageobjekten erfolgen kann. Dies kann zeitsparend zu Handlungsempfehlungen für Nutzer hinsichtlich der unterschiedlichen Anlageobjekte führen.

Um die komplexen Daten verarbeiten zu können, ist das System vorzugsweise in mehreren Ebenen aufgeteilt, wobei lediglich zwei benachbarte Ebenen in Datenaustausch stehen können. Eine erste Ebene ist als eine Plattformebene ausgebildet. Hieran hierarchisch anschließend folgen eine erste Wissensebene, eine zweite Wissensebene und eine dritte Wissensebene. Die Wissensebenen weisen jeweils unterschiedliche Verarbeitungsfunktionen sowie Datenressourcen auf. Die erste Wissensebene dient zur Verarbeitung einer statischen Bewertung der Anlageobjekte. Die zweite Wissensebene dient zur Verarbeitung einer dynamischen Bewertung der Anlageobjekte. Die dritte Wissensebene kommuniziert mit der zweiten Wissensebene und ermöglicht die Berücksichtigung von Expertensystemen bzw. externen Datenbanken.

Nach der Erfindung setzt sich ein Bewertungsmodul des Systems aus einem statischen Bewertungsmodul und einem dynamischen Bewertungsmodul zusammen. In dem statischen Bewertungsmodul erfolgt die Verarbeitung von Bewertungsinformationen auf Basis von Anlageobjekt bezogenen Daten, also von Daten der im Immobilienbestand befindlichen Anlageobjekte. In dem dynamischen Bewertungsmodul erfolgt die Verarbeitung von Bewertungsinformationen auf Basis von marktbezogenen Daten, also von Informationen von nicht im Immobilienbestand befindlichen Anlageobjekten bzw. von in einem Markt angebotenen Anlageobjekten. Ein erfindungsgemäßes KI-Modul weist ein Regelwerk auf, nach dem die bestandsbezogenen Daten bzw. marktbezogenen Daten der Anlageobjekte verarbeitet und ausgewertet werden. Das KI-Modul ist als ein selbstlernendes Modul ausgebildet, welches einen Algorithmus zum maschinellen Lernen aufweist, in dem das Regelwerk informationstechnisch umgesetzt ist. Das KI-Modul ermöglicht eine zeitaktuelle Überprüfung von Objektattributen des Anlageobjektes, beispielsweise des Preises des Anlageobjektes, der Betriebskosten desselben, der Modernisierung des Anlageobjektes in Abhängigkeit von aktuellen Marktdaten. Die Erfindung ermöglicht somit eine Handlungsempfehlung für Portfoliomanager eines Immobilienportfolios, die über einen relativ großen Immobilienbestand verfügen, wobei die Handlungsempfehlungen zu einer Optimierung des Immobilienportfolios führen. Beispielsweise kann die erfindungsgemäße Bewertung des Immobilienbestandes dazu führen, dass für ein bestimmtes Anlageobjekt, das sich in einer bestimmten Lage eines bestimmten Ortes befindet, aufgrund der aktuellen Marktdaten herausgefunden werden kann, dass durch Modernisierung des Anlageobjektes ein erhöhter Mietpreis erzielbar ist, der zu einer Amortisierung in einem vorgegebenen Zeitraum führt. Die Überprüfung bzw. Verarbeitung durch das KI-Modul kann zu einem Aktionssignal führen, das eine Handlungsempfehlung für den Portfoliomanager bezüglich des betreffenden Anlageobjektes darstellt. Der Portfoliomanager kann beispielsweise daraufhin den Eigentümer des betreffenden Anlageobjektes kontaktieren und ihm den Vorschlag für eine Modernisierung unterbreiten. Das KI-Modul ermöglicht beispielsweise die marktabhängige Preisbestimmung des Anlageobjektes, so dass als Handlungsempfehlung durch das Aktionssignal ausgegeben werden kann, das Anlageobjekt zu verkaufen, da sich die Immobilienpreise für die betreffende Lage des Anlageobjektes in einem aktuell hohen Preisbereich befinden. Beispielsweise können zu bestehenden Anlageobjekten ermittelte vergleichbare, auf dem Immobilienmarkt befindliche ähnliche Anlageobjekte ermittelt werden, deren aktueller Kaufpreis im Vergleich zu dem im Bestand befindlichen ähnlichen Anlageobjekt (unter Berücksichtigung der Inflation und der Rendite in der Vergangenheit) niedriger ist, so dass das erzeugte Aktionssignal die Handlungsempfehlung ausgibt, dieses im Markt befindliche Anlageobjekt zu kaufen und damit den Immobilienbestand zu erhöhen.

Nach einer bevorzugten Ausführungsform der Erfindung liegen die bestandsbezogenen Daten und die marktbezogenen Daten der Anlageobjekte in Vektoren vor, die jeweils Objektattribute, wie Baujahr, Bodenfläche, Adresse, Lage, Preis und dergleichen als Kategoriewerte umfassen. Die Daten liegen somit in Kategorien vor, deren Inhalte bzw. Werte mittels einer Ähnlichkeitsprüfung durch das KI-Modul unterzogen werden, so dass bei Abweichung des mindestens ein Kategoriewertes von einem Vergleichswert das Aktionssignal zur Handlungsempfehlung betreffend eines Anlageobjektes erzeugt wird.

Nach einer Weiterbildung der Erfindung sind Werte der Kategorien mit einem Gewichtungskoeffizienten versehen, so dass die Ähnlichkeitsprüfung und/oder Vergleichsprüfung unter Berücksichtigung unterschiedlich gewichteter Objektattribute erfolgen kann. Auf diese Weise kann die Portfoliostrategie beispielsweise sicherheitsorientiert oder renditeorientiert eingestellt werden.

Zur Lösung der Aufgabe ist das erfindungsgemäße Verfahren in Verbindung mit dem Oberbegriff des Patentanspruchs 12 dadurch gekennzeichnet, dass in einem ersten Schritt die bestandsbezogenen Daten in das Rechnersystem eingegeben und verarbeitet werden, dass in einem zweiten Schritt erste marktbezogene Daten ohne Nutzung eines externen Informationsanbieters in das Rechnersystem eingegeben werden und von demselben verarbeitet werden, wobei ein erstes Bewertungsergebnis unter optionaler Gewichtung der einzelnen bestandsbezogenen Daten und ersten marktbezogenen Daten ermittelt wird, dass in einem dritten Schritt die zu dem ersten Bewertungsergebnis führenden bestandsbezogenen Daten und zweite marktbezogene Daten unter Nutzung des externen Informationsanbieters in dem Rechnersystem verarbeitet werden, wobei ein zweites Bewertungsergebnis unter Vergleich der ersten marktbezogenen Daten und der zweiten marktbezogenen Daten ermittelt wird.

Vorteilhaft ermöglicht das erfindungsgemäße Verfahren die Förderung eines Lernprozesses bei dem Nutzer des Verfahrens. Ein erstes Bewertungsergebnis wird in Abhängigkeit von ersten marktbezogenen Daten des Nutzers ermittelt. Ein zweites Bewertungsergebnis wird in Abhängigkeit von marktbezogenen Daten eines externen Informationsanbieters (Wirtschaftsdatenbank etc.) ermittelt. Das zweite Bewertungsergebnis ist das aktuelle und gültige Bewertungsergebnis für das jeweilige Anlageobjekt. Die marktbezogenen Daten sind zeitlich veränderliche Informationen und können beispielsweise die aktuelle Bevölkerungsstruktur betreffen, in dem sich das Anlageobjekt befindet. Wenn das zweite Bewertungsergebnis von dem ersten Bewertungsergebnis signifikant abweicht, erhält der Nutzer die Information, dass seine persönliche Datenbasis für die Bestimmung des ersten Bewertungsergebnisses nicht korrekt war. Diese Zusatzinformation kann dazu genutzt werden, dass der Nutzer Weiterbildungsmaßnahmen ergreift, um einen besseren Marktüberblick zu erlangen. Die Erfindung ermöglicht somit eine Verbesserung des Lernprozesses bei der Bewertung von Anlageobjekten durch den Nutzer.

Nach einer Weiterbildung der Erfindung sind die bestandsbezogenen Daten und/oder die marktbezogenen Daten in Gruppen von Daten zusammengefasst, wobei Teil-Bewertungsergebnisse unter Anwendung einer Gewichtungsvorschrift oder unter Anwendung keiner Gewichtungsvorschrift erfolgt. Aus den Teil-Bewertungsergebnissen wird dann das Bewertungsergebnis, beispielsweise ein erstes Bewertungsergebnis, auf Basis der von dem Nutzer bereitgestellten Informationen, oder ein zweites Bewertungsergebnis auf Basis der von einem externen Informationsanbieter und gegebenenfalls dem Nutzer basierenden Informationen, ermittelt. Durch die vorzugsweise funktionsbezogene Gruppierung der Daten (bestandsbezogene Daten bzw. marktbezogene Daten) kann ein besseres Gewichtungsergebnis erzielt werden, da für die Bewertung miteinander verwandte, d. h. in hoher Korrelation zueinander stehende Daten, zu einem verbesserten Bewertungsergebnis der Gruppe führen können. Stark zueinander korrelierende Daten können somit zu einer gemeinsamen Gruppe zusammengefasst werden, was die Aussagekraft dieses gruppenbezogenen Bewertungsergebnisses fördert. Die Bewertungsergebnisse der unterschiedlichen Gruppen können dann mittels einer Gewichtungsvorschrift oder keiner Gewichtungsvorschrift kombiniert werden, so dass sich hieraus sich das Bewertungsergebnis ergibt. Im einfachsten Fall kann ohne einen Gewichtungsfaktor der Durchschnitt der Teil-Bewertungsergebnisse zur Bildung des ersten und zweiten Bewertungsergebnisses führen.

Nach einer bevorzugten Ausführungsform der Erfindung wird das Bewertungsergebnis in Form eines Ampelsymbols angezeigt, so dass der Nutzer relativ schnell ein Aktionssignal entnehmen kann, ob Handlungsbedarf bzgl. des Anlageobjektes besteht oder nicht.

Zur Lösung der Aufgabe weist die Erfindung die Merkmale des Patentanspruchs 17 auf.

Der besondere Vorteil der erfindungsgemäßen Plattform besteht darin, dass auf einfache und übersichtliche Weise Bewertungsergebnisse in Ausgabemitteln, insbesondere einem Monitor eines Rechnersystems angezeigt werden können.

Nach einer Weiterbildung der Erfindung weist die Plattform ein Rechnersystem und ein Kommunikationsnetzsystem sowie eine Applikationssoftware auf, so dass der Nutzer nach Signalisierung eines Aktionssignals durch das Bewertungssystem die Plattform zu Kommunikation mit interessierten Dritten führen kann. In einem ersten Schritt erfolgt die Kommunikation des Nutzers mit Dritten anonym, so dass der Nutzer geschützt ist. Erst wenn eine Übereinstimmung zwischen dem Nutzer und dem Dritten zur Erlangung eines Vertragsabschlusses zustande kommt, wird das Senden und Herausgeben von persönlichen Daten des Nutzers für den Dritten freigegeben. Die Freigabe erfolgt vorzugsweise nur in Bezug zu dem interessierten Dritten.

Nach einer Weiterbildung der Erfindung weist das Rechnersystem ein Anonymmodul auf, mittels dessen ein Austausch von Daten zwischen dem Nutzer und Dritten gesteuert wird. In einem ersten Schritt werden lediglich Daten anonym ausgetauscht, d. h. ohne Angabe von persönlichen Daten des Nutzers. Erst in einem zweiten Schritt, wenn es zu einem Vertragsabschluss kommt, werden die persönlichen Daten des Nutzers freigegeben für den Dritten, und zwar vorzugsweise ausschließlich nur für diesen Dritten.

Ausführungsbeispiele der Erfindung werden nachfolgend anhand der Zeichnungen näher erläutert.

Es zeigen:
- Figur 1: ein Blockschaltbild eines erfindungsgemäßen Systems unter Darstellung mehrerer Schichten,
- Figur 2: ein Blockschaltbild einer systematischen Anordnung von unterschiedlichen Anlageobjekten in dem System und Auswertung bzw. Bewertung derselben mittels eines erfindungsgemäßen KI-Moduls,
- Figur 3: eine Matrixdarstellung einer Mehrzahl von Anlageobjektvektoren mit enthaltenen Objektattributen,
- Figur 4: ein Flussdiagramm des mit dem KI-Modul durchgeführten Bewertung,
- Figur 5: ein Ablaufdiagramm für eine plattformbasierte Bewertung eines Anlageobjektes nach einer alternativen Ausführungsform,
- Figur 6: ein Flussdiagramm für eine statische Bewertung des Anlageobjektes,
- Figur 7: ein Flussdiagramm für eine dynamische Bewertung des Anlageobjektes,
- Figur 8: eine Fensterdarstellung auf einer Plattform des erfindungsgemäßen Bewertungssystems mit Darstellung des statischen und dynamischen Bewertungsergebnisses und
- Figur 9: ein Schichtenaufbau des erfindungsgemäßen Systems.

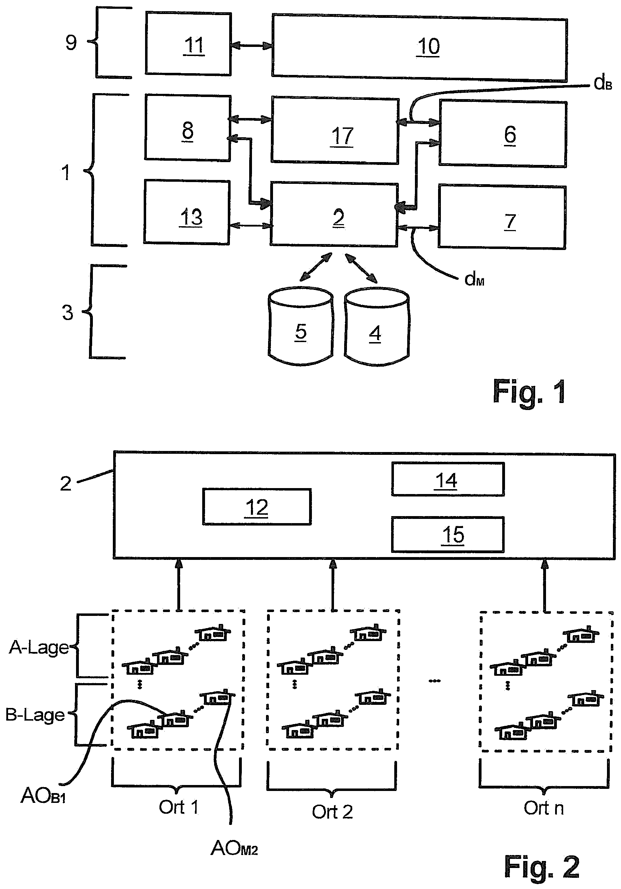

Ein System zum automatischen Bereitstellen von Informationen über Anlageobjekte AO_{B1}, AO_{B2}...AO_{Bn} eines Immobilienbestandes besteht im Wesentlichen aus den in Figur 1 dargestellten funktionalen Komponenten. In einer Applikationsschicht 1 ist ein KI-Modul 2 vorgesehen, das als Bewertungseinheit auf Basis eines vorgegebenen Regelwerkes die Bewertung der Anlagenobjekte AO_{B1}, AO_{B2}...AO_{Bn} durchführt. Die jeweiligen Anlageobjekte AO_{B1}, AO_{B2}...AO_{Bn} kennzeichnenden bestandsbezogenen Daten d_{B} sind in einer Datenhaltungsschicht 3 in einer Anlageobjekt-Datenbank 4 gespeichert angeordnet. Benutzerdaten für den Zugang zu dem System bzw. des KI-Moduls 2 sind in einer ebenfalls in der Datenhaltungsschicht 3 angeordneten Benutzer-Datenbank 5 hinterlegt.

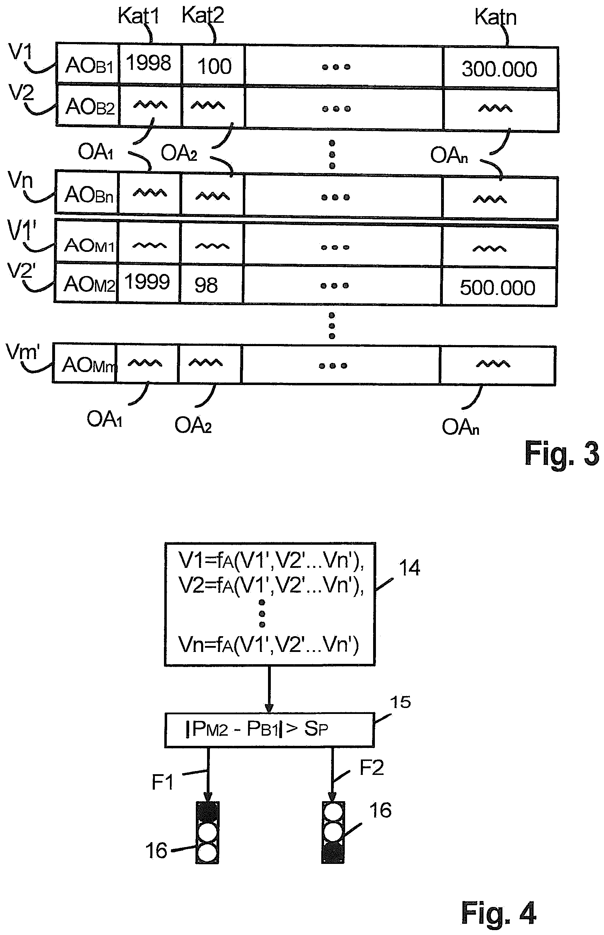

Dem KI-Modul 2 ist als Bewertungsmodul zum einen ein statisches Bewertungsmodul 6 und zum anderen dynamisches Bewertungsmodul 7 zugeordnet. Das statische Bewertungsmodul 6 weist die bestandsbezogenen Daten d_{B} der Anlageobjekte AO_{B1}, AO_{B2}...AO_{Bn} des Bestandes auf, die als Vektoren V1, V2...Vₙ matrixartig abgespeichert sind, wobei jeder Vektor eine Mehrzahl von in Kategorien Kat1, Kat2... Katₙ kategorisierte Objektattribute aufweist. Wie aus Figur 3 zu ersehen ist, können die Vektoren V1, V2...Vₙ als Kategorie Kat1 das Objektattribut "Baujahr" des Anlageobjektes AO_{B1}, als Kategorie Kat2 die "Wohnfläche" des Anlageobjektes AO_{B1} usw. aufweisen. Zur Bereitstellung der entsprechenden bestandsbezogenen Daten d_{B} ist in der Applikationsschicht 1 ein Dokumentverarbeitungsmodul 8 vorgesehen, in dem die über ein in einer Präsentationsschicht 9 angeordnetes Schnittstellenmodul 10 bzw. User-Interface 11 die bestandsbezogenen Daten d_{B} hochgeladen werden. Die bestandsbezogenen Daten d_{B} werden aus das Anlageobjekt AO_{B1}, AO_{B2}...AO_{Bn} kennzeichnenden Dokumenten, wie beispielsweise Grundbücher, Bebauungsplan, Lageinformation, Kaufvertrag, Fotos, Videos und dergleichen, extrahiert und in dem Dokumentverarbeitungsmodul 8 kategorisiert. Hierzu liest das KI-Modul 2 die entsprechenden in dem Dokumentenverarbeitungsmodul 8 angelegten bestandsbezogenen Daten d_{B} aus und speichert sie in einer zur weiteren Verarbeitung vorgesehenen Form in dem statischen Bewertungsmodul 6 ab.

Das KI-Modul 2 weist eine Dokumentüberprüfungsroutine 12 auf, mittels derer die bestandsbezogenen Daten d_{B} auf Vollständigkeit überprüft werden. Fehlen Angaben zu dem jeweiligen Anlageobjekt AO_{B1}, AO_{B2}...AO_{Bn}, wird ein Fragebogen mittels eines Fragebogenmoduls 17 generiert, der dem Nutzer des Systems zur Beantwortung über das Schnittstellenmodul 10 übertragen wird. Werden die offenen Fragen des Fragebogens von dem Nutzer beantwortet zurückgesendet, werden die bestandsbezogenen Daten d_{B} vorzugsweise gewichtet nach Relevanz zur Bildung der Vektoren V1, V2...Vₙ bewertet. In Abhängigkeit von der Vollständigkeit der erhobenen bestandsbezogenen Daten d_{B} erfolgt eine Bewertung in grafischer Ampelform, wobei das Signal grün bedeutet, dass alle bestandsbezogenen Daten d_{B} vollständig sind, wobei das Ampelsignal mit der Farbe Gelb bedeutet, dass die bestandsbezogenen Daten d_{B} teilweise vollständig sind, eine weitere Bewertung des Anlageobjektes AO_{B1}, AO_{B2}...AO_{Bn} sinnvoll möglich, aber nicht vollständig sein kann. Ein Ampelsignal mit der Farbe Rot signalisiert, dass die bestandsbezogenen Daten d_{B} nicht ausreichend sind, so dass eine Bewertung des Anlageobjektes AO_{B1}, AO_{B2}...AO_{Bn} nur eingeschränkt oder gar nicht möglich ist.

Das KI-Modul 2 ist mit einem Immobilien-Informationsmodul 13 (Marktplatzmodul) verknüpft, mittels dessen marktbezogene Daten d_{M} (Daten vom statistischen Bundesamt, von Maklern, von Banken und Versicherungen, von Bauunternehmen, von Architektur- und Ingenieurbüros) zu Anlageobjekten AO_{M1}, AO_{M2},...AO_{Mn} des Immobilienmarktes und/oder des Immobilienbestandes bereitgestellt werden und mittels des KI-Moduls 2 weiter verarbeitet werden zu dem dynamischen Bewertungsmodul 7. Das dynamische Bewertungsmodul 7 enthält eine Matrix von Vektoren V1', V2'...Vₙ', von marktbezogenen Daten d_{M}, die in der gleichen Weise kategorisiert sind wie die die bestandsbezogenen Daten d_{B} enthaltenen Vektoren V1, V2...Vₙ Die marktbezogenen Daten können d_{M} von externen Datenbanken, wie beispielsweise Immobilienplattformen, Expertengutachten, zusammengesetzt sein. Mittels des KI-Moduls 2 erfolgt die Verarbeitung der marktbezogenen Daten d_{M} zu entsprechenden Vektoren V1', V2'...Vₙ' etc., die in dem dynamischen Bewertungsmodul 7 abgelegt sind.

Unter Berücksichtigung oder Heranziehung der marktbezogenen Daten d_{M} erfolgt in dem KI-Modul 2 zum einen die Abarbeitung einer Ähnlichkeitsprüfung 14 und einer Vergleichsprüfung 15. Die Ähnlichkeitsprüfung 14 sieht vor, dass die gespeicherten Vektoren V1, V2...Vₙ; V1', V2'...Vₙ' auf Ähnlichkeit hinsichtlich der enthaltenen kategorisierten Objektattribute überprüft werden. Hierbei werden vorzugsweise die jeweils den gleichen Kategorien Kat1, Kat2... Katn zugewiesenen Objektattribute OA1, OA2...OAₙ der Vektoren V1, V2...Vₙ; V1', V2'...Vₙ' verglichen. Vorzugsweise sind die Objektattribute OA1, OA2...OAₙ gewichtet mit einem Gewichtungskoeffizienten zwischen Null und Eins, so dass eine Unterscheidung zwischen weniger relevanten und hoch relevanten Objektattributen OA1, OA2...OAₙ vorgenommen wird. Für die Ähnlichkeitsprüfung 14 wird eine Ähnlichkeitsfunktion f_{A} angewendet, und zwar vorzugsweise für alle Vektoren V1, V2...Vₙ; V1', V2'...Vₙ'. Beispielsweise kann das Objektattribut OA1 entsprechend Baujahr des Anlageobjektes einen geringeren Gewichtungskoeffizienten aufweisen als das Objektattribut OA2 betreffend Wohnfläche des Anlageobjektes AO_{B1}, AO_{B2}...AO_{Bn}; AO_{M1}, AO_{M2},...AO_{Mn}. Die Ähnlichkeitsüberprüfung 14 kann beispielsweise eine Clusteranalyse enthalten, bei der aus der Klassifizierung der Objektattribute OA1, OA2...OAₙ eine Mustererkennung erfolgt. Bei positiver Ähnlichkeitsprüfung 14 werden solche Vektoren V1, V2...Vₙ; V1', V2'...Vₙ' identifiziert, die bezüglich ihrer Kategorien eine große Ähnlichkeit aufweisen. So kann beispielsweise im Rahmen der Ähnlichkeitsprüfung 14 festgestellt werden, dass die Vektoren V1 und V2' ähnlich sind. Es handelt sich um vergleichbare Anlageobjekte, wobei sich das durch den Vektor V1 gekennzeichnete Anlageobjekt AO_{B1} im Bestand des Immobilienportfolios befindet, während das durch den Vektor V2' gekennzeichnete Immobilienobjekt A0_{M2} sich nicht im Immobilienportfolio befindet, sondern durch das Immobilienmodul 13 bereitgestellt worden ist. Der Vektor V2' weist bezüglich der Kategorien Kat1 "Baujahr", Kat2 "Wohnfläche" sowie Lage des Objektes bzw. der Adresse Ähnlichkeiten auf. Im vorliegenden Ausführungsbeispiel befindet sich das Anlageobjekt AO_{B1} entsprechend Vektor V1 in derselben Straße wie das externe Objekt AO_{M2}(Vektor 2'). Während das Anlageobjekt AO_{B1} im Jahre 1998 errichtet wurde mit 100 qm Wohnfläche und sich in der Wilhelmstr. 9 (Lage B) befindet, ist das externe Objekt AO_{M2} im Jahr 1999 errichtet worden, weist eine Wohnfläche von 98 qm auf und befindet sich in der Wilhelm-Str. 20 (Lage B) derselben Stadt.

In der weiteren Vergleichsprüfung 15 erfolgt eine Preisprüfung, bei der aktuelle Mietpreise des Anlageobjektes AO_{B1} mit dem Mietpreis des Anlageobjektes AO_{M2} verglichen wird. Der Mietpreis des Anlageobjektes AO_{M2} kann durch den von der externen Immobilienplattform entnommene Kaufpreis mittels eines entsprechenden Faktors berechnet werden. Ist der Betrag aus der Differenz des Mietpreises P_{B1} des Anlageobjektes AO_{B1} und des Mietpreises P_{M2} des Anlageobjektes AO_{M2} größer als ein vorgegebener Mietpreisschwellwert S_{P}, erfolgt ein Aktionssignal F1, mittels dessen eine Bewertungsampel 16 (Ampelfunktion) des dynamischen Bewertungsmoduls 7 "rotes Licht" signalisiert. Dies bedeutet, dass der aktuelle Mietzins wesentlich höher ist als der Mietzins des im Bestand befindlichen Anlageobjektes AO_{B1}. Es wird dem Nutzer hierdurch eine Handlungsempfehlung gegeben, den Mietpreis bei nächster Gelegenheit zu erhöhen bzw. an die Marktgegebenheiten anzupassen. Ist die Differenz zwischen dem Mietzins des Marktobjektes AO_{M2} und dem Anlageobjekt AO_{B1} des Bestandes gleich oder kleiner als der vorgegebene Schwellwert S_{P}, erfolgt ein Signal F2, das in Form eines "grünen Signals" einer Bewertungsampel 16 signalisiert wird. Die Farbe Grün signalisiert dem Nutzer, dass kein Handlungsbedarf besteht. Gegebenenfalls kann die Vergleichsprüfung auch gestaffelt vorgenommen werden, so dass ein "gelbes Ampelsignal" erzeugt wird, wenn die betragsgemäße Differenz aus den Mietpreisen der beiden Objekte nur wenig unterhalb des Schwellwertes S_{P} liegt. Hierdurch kann dem Nutzer angedeutet werden, dass der aktuelle Mietzins für das Anlageobjekt AO_{B1}, AO_{B2}...AO_{Bn} schon relativ weit vom Marktpreis entfernt ist und bald angepasst werden müsste, und zwar wenn das Signal der Bewertungsampel 16 auf Rot springt.

Das Ampelsystem mit der Signalisierung der Farben rot, gelb und grün ermöglicht eine einfache Bewertung des aktuellen Zustands der Anlageobjekte AO_{B1}, AO_{B2}...AO_{Bn} im Vergleich zu den Marktgegebenheiten. Das erfindungsgemäße Bewertungssystem kann Entscheidungsempfehlungen geben und Vorhersagen machen, so dass der Nutzer, der ein relativ großes Immobilienportfolio verwaltet, effektiv und zuverlässig eine Optimierung des Immobilienportfolios erhält. Wenn beispielsweise im Rahmen der Ähnlichkeitsprüfung 14 festgestellt würde, dass vergleichbare Anlageobjekte der gleichen Lage in gleichen oder unterschiedlichen Städten unterschiedliche Mietpreise generieren, würde das System selbständig den Mietpreisunterschied zwischen ähnlichen Anlageobjekten erkennen und im Rahmen der Vergleichsprüfung 15 ein entsprechendes Aktivierungssignal F1, F2 erzeugen. Das System ermöglicht eine selbständige Klassifikation, nach denen Ähnlichkeitsmuster eingeteilt werden können, die dann im Rahmen der Ähnlichkeitsprüfung 15 identifiziert werden. Das KI-Modul 2 ermöglicht somit ein maschinelles Lernen, bei dem Muster bzw. Cluster erkannt, verarbeitet und Handlungsanweisungen hieraus abgleitet werden können.

Der in der Beschreibung verwendete Begriff "Anlageobjekt" ist nicht auf Wohnungen, Häuser, Gebäude beschränkt, sondern umfasst auch bebaute und unbebaute Grundstücke sowie Immobilienportfolios, die in gleicher Weise wie genutzte und ungenutzte Immobilien Gegenstand einer erfindungsgemäßen Bewertung sein können.

In dem Dokumentenverarbeitungsmodul 8 sind insbesondere bestandsbezogene Daten (d_{B}) des des jeweiligen Bestandes von Immobilien, Grundstücken und/oder ganzen Portfolien strukturiert und geordnet mit einer Schlagwortverwaltung gespeichert.

Nach einer nicht dargestellten alternativen Ausführungsform der Erfindung kann das Aktionssignal F1, F2 auch zur Ansteuerung einer anderen Signalisierung von Handlungsanweisungen als das Ampelsymbol dienen. Beispielsweise kann eine Bewertungssignalisierung durch Anzeige eines Farbspektrums mit einer Mehrzahl von unterschiedlichen Farben oder durch eine Ziffernfolge erfolgen. Das Farbspektrum und die Ziffernfolge stellen jeweils eine Skala mit einer Mehrzahl von Skalenelementen (Farben, Ziffern) dar, beispielsweise bei der Ziffernskala von 1 bis 10, so dass mehr als drei unterschiedliche Grade von Handlungsempfehlungen darstellbar sind. Vorteilhaft ergibt sich hierbei eine höhere Auflösung der Handlungsempfehlungen, so dass die Bewertung detaillierter sein kann.

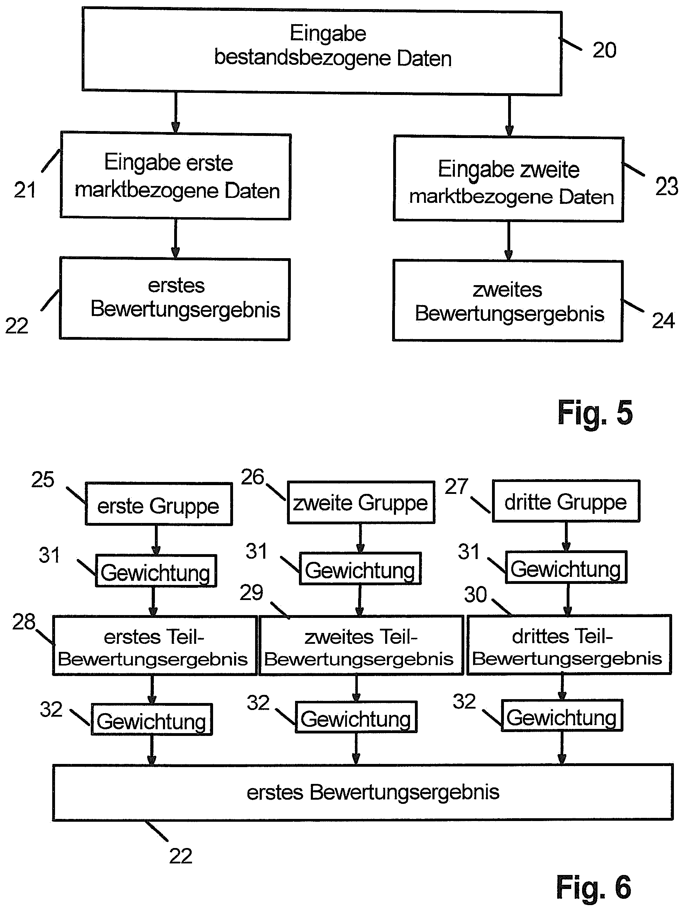

Nach einer weiteren Ausführungsform der Erfindung ist eine Plattform zur Bewertung von Anlageobjekten AO₁, AO₂... AOₙ vorgesehen, mittels derer ein webbasiertes Bewertungsergebnis erzielt werden kann. An die webbasierte Plattform nutzt das in Figur 1 dargestellte System zum automatischen Bereitstellen von Informationen über Anlageobjekte eines Immobilienbestandes, wobei ein Nutzer über einen Rechner (PC) mit der Plattform über ein Kommunikationsnetzsystem, beispielsweise Internet, verbunden ist....über das Userinterface 11 mit der Applikationsschicht 1 des Systems... verbunden ist. Die webbasierte Plattform bzw. Webanwendung umfasst eine Applikationssoftware, mittels derer die Bewertung bzw. Bewertungsschritte durchgeführt und das Bewertungsergebnisse angezeigt werden. In einem ersten Schritt 20 gemäß Figur 5 gibt der Nutzer bestandsbezogene Daten d_{B} ein, die über die Applikationsschicht 1 in die Anlageobjekt-Datenbank 4 eingelesen werden. Die bestandsbezogenen Daten umfassen beispielsweise die Kategoriewerte Baujahr, Wohnfläche, Gebäudetyp und dergleichen des entsprechenden Anlageobjektes AO₁, AO₂,...AOₙ. In einem zweiten Schritt 21 gibt der Nutzer erste marktbezogene Daten d_{M} ein ohne Zuhilfenahme von externen Informationsanbietern, die über das Immobilien-Informationsmodul 13 zugreifbar wären. Diese ersten marktbezogenen Daten können eine Lage des Anlageobjekts AO₁ betreffen,
beispielsweise Informationen bzw. Kategoriewerte über die Gemeindegrößen sein, in der sich die Anlageobjekte befinden. Im Folgenden ist eine Übersicht einer ersten Gruppe 25 von marktbezogenen Daten betreffend die Lage des jeweiligen Anlageobjekts AO₁ unter Auswahl von vorgegebenen Informationen bzw. Kategoriewerte dargestellt. Der Nutzer wählt zu jeder Frage eine einzige Antwort aus, die als erste marktbezogene Daten d_{M} für die Bestimmung des ersten Bewertungsergebnisses herangezogen wird.

### LAGE

**Makrolage**

| Gemeindegröße | | |
|---|---|---|
| 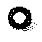 Strukturdaten >= 100 Bevölkerungsstruktur | 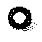 Strukturdaten 80-100 | 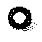 Strukturdaten < 80 |
| 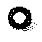 Strukturdaten >= 100 Wirtschaftskraft | 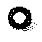 Strukturdaten 80-100 | 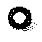 Strukturdaten < 80 |
| 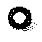 Hohe Wirtschaftskraft | 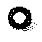 Mittlere Wirtschaftskraft | 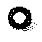 Niedrige Wirtschaftskraft |

**Mikrolage**

| Wohnumfeld | | |
|---|---|---|
| 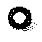 Gutes Wohnumfeld Einkaufsmöglichkeiten | 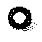 Mittleres Wohnumfeld | 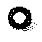 Niedriges Wohnumfeld |
| 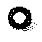 Vollumfänglich vorhanden | 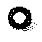 Überwiegend vorhanden | 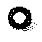 Kaum vorhanden |

Die Applikationssoftware der Plattform bietet dem Nutzer für jeden Kategoriewert mehrere Möglichkeiten an, beispielsweise für Wohnumfeld: gutes Wohnumfeld oder mittleres Wohnumfeld oder niedriges Wohnumfeld; für Einkaufsmöglichkeiten: vollumfänglich vorhanden oder überwiegend vorhanden oder kaum vorhanden. Es handelt sich bei diesen ersten marktbezogenen Daten um Informationen bezüglich des Anlageobjektes hinsichtlich seiner Makrolage und seiner Mikrolage.

Weiterhin können sachwertbezogene Fragen angegeben werden, wie beispielsweise Mieterstruktur, Mieterbonität, Mieterhöhungsmöglichkeiten. Für jede dieser Fragen werden in der Regel drei Antwortmöglichkeiten vorgegeben, insbesondere gut, mittel und schlecht, siehe folgende Übersicht einer zweiten Gruppe 26 von marktbezogenen Daten betreffend die Mietstruktur des jeweiligen Anlageobjekts AO₁. Der Nutzer wählt zu jeder Frage eine einzige Antwort aus, die als erste marktbezogene Daten d_{M} für die Bestimmung des ersten Bewertungsergebnisses herangezogen wird.

### MIETSTRUKTUR

**Gebäude/Struktur**

| Mieterstruktur | | |
|---|---|---|
| 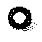 Gute Mieterstruktur Miethöhe | 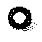 Mittlere Mieterstruktur | 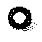 Schlechte Mieterstruktur |
| 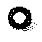 Mindestens ortsüblich Mieterbonität | 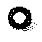 Ortsüblich | 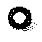 Unter ortsüblich |
| 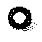 Gute Mieterbonität Steigerungspotential | 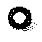 Mittlere Mieterbonität | 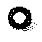 Schlechte Mieterbonität |
| 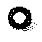 Gut Mieterhöhungsmöglichkeiten | 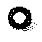 Mittel | 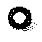 Schlecht |
| 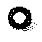 Gut | 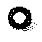 Mittel | 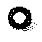 Schlecht |

Darüber hinaus können sachwertbezogene Fragen angegeben, die eine dritte Gruppe 27 von marktbezogenen Daten betreffend das Objekt des jeweiligen Anlageobjekts AO₁ enthält, siehe folgende Tabelle.

### OBJEKT

**Gebäude/Struktur**

| Wohnungsgröße | | |
|---|---|---|
| 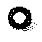 Bis 12 Wohnungen Alter | 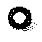 Bis 24 Wohnungen | 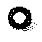 Über 24 Wohnungen |
| 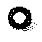 Bis 20 Jahre Bauweise | 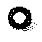 Bis 30 Jahre | 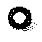 Über 30 Jahre |
| 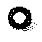 Bis 4 Geschosse Energetischer Zustand | 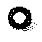 Bis 6 Geschosse | 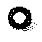 Über 6 Geschosse |
| 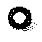 Gut Nebenbereiche | 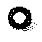 Mittel | 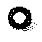 QSchlecht |
| 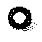 Balkone | 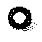 Stellplätze | 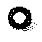 Kellerräume |

Der Nutzer wählt zu jeder Frage eine einzige Antwort aus, die als erste marktbezogene Daten d_{M} für die Bestimmung des ersten Bewertungsergebnisses herangezogen wird.

Unter Anwendung des KI-Moduls 2 wird auf Basis der bestandsbezogenen Daten und dieser ersten marktbezogenen Daten ein erstes Bewertungsergebnis ermittelt, das im Schritt 22 dargestellt wird. Das erste Bewertungsergebnis stellt eine statische Bewertung des Anlageobjektes AO₁ dar, die auf den Informationen des Nutzers basieren.

In einem weiteren Schritt 23 können alternativ oder zusätzlich zweite marktbezogene Daten unter Zuhilfenahme eines externen Informationsanbieters eingelesen werden, und zwar vorzugsweise über das Immobilien-Informationsmodul 13. Hierzu gehören insbesondere die gleichen Kategoriewerte der gleichen drei Gruppen von marktbezogenen Daten, die im Schritt 21 als erste marktbezogene Daten d_{M} eingelesen worden sind, nämlich Daten über die Lage, Mietstruktur und Objekt des Anlageobjektes, Im Unterschied zu Schritt 21 werden diese Daten mittels des Immobilien-Informationsmodul 13 aus öffentlich frei zugänglichen Datenbanken oder Bezahldatenbanken gespeist, beispielsweise statistisches Bundesamt, Wirtschaftsdatenbanken etc.

In einem weiteren Schritt 24 erfolgt mittels des KI-Moduls 2 die Bestimmung eines zweiten Bewertungsergebnisses, das im Wesentlichen auf den bestandsbezogenen Daten und den zumindest teilweise über den externen Informationsanbieter erhaltenen zweiten marktbezogenen Daten basiert.

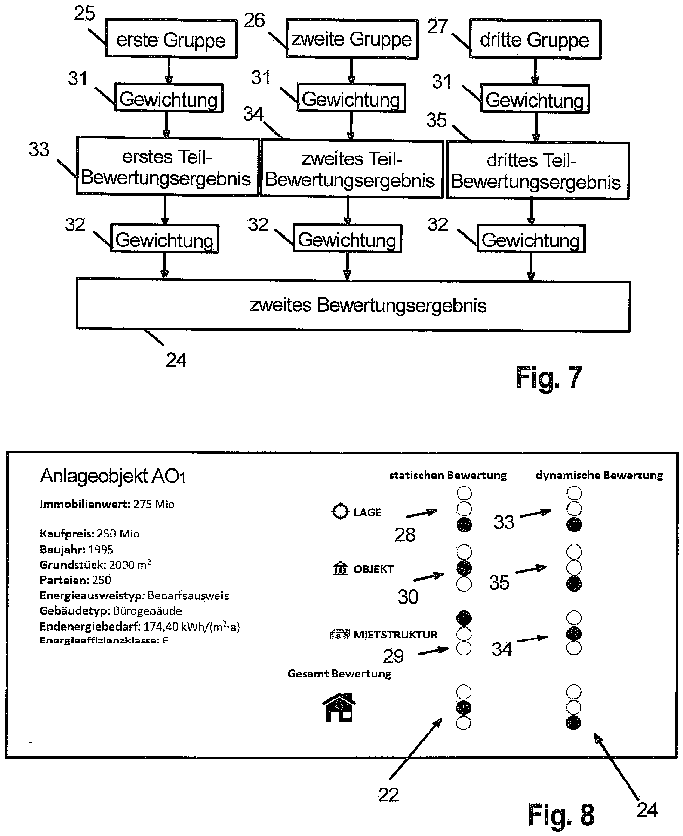

Als Endergebnis werden das erste Bewertungsergebnis 22 und das zweite Bewertungsergebnis 24 auf einer Seite der Plattform in Form einer Ampeldarstellung 16 entsprechend Figur 8 dargestellt.

Das erste Bewertungsergebnis 22 stellt eine statische Bewertung dar. Im vorliegenden Fall wird das erste Bewertungsergebnis 22 als gelbes Ampelsignal dargestellt. Das zweite Bewertungsergebnis 24 stellt eine dynamische Bewertung dar, wobei im vorliegenden Ausführungsbeispiel das zweite Bewertungsergebnis 24 als grünes Ampelsignal dargestellt wird. Das grüne Ampelsignal bedeutet, dass kein Handlungsbedarf besteht. Das Anlageobjekt AO₁ kann weiter im Bestand bleiben. Würde das Ampelsignal rot sein, bestünde Handlungsbedarf, so dass das Anlageobjekt AO₁ aufgrund der Marktdaten verkauft werden sollte einerseits oder dass beispielsweise Maßnahmen zur Gebäuderenovierung vorgenommen werden sollten andererseits. Die Bewertungssignale 22, 24 bilden auf einfache Weise das Aktionssignal F1, F2 für den Nutzer, um gegebenenfalls Maßnahmen zu ergreifen.

Darüber hinaus ermöglicht die doppelte Darstellung der Bewertung, nämlich die Darstellung der statischen Bewertung und der dynamischen Bewertung, dass der Nutzer einfach überprüfen kann, ob seine eigenen, insbesondere frei zugänglichen ersten marktbezogenen Daten, aktuell sind oder nicht. Wenn sich - wie im vorliegenden Ausführungsbeispiel - die Ampelsignale der statischen Bewertung und der dynamischen Bewertung unterscheiden, kann der Nutzer einfach erkennen, ob die ihm zu Verfügung stehenden Daten ausreichend aktuell oder richtig sind.

Der Informationsgehalt wird erhöht, wenn die bestandsbezogenen und ersten marktbezogenen sowie die zweiten marktbezogenen Daten in Gruppen klassifiziert werden. Wie aus Figur 6 zu ersehen ist, kann beispielsweise die erste Gruppe 25 betreffend die Lage des Anlageobjektes AO₁, die zweite Gruppe 26 betreffend die Mietstruktur des Anlageobjektes AO₁ und die dritte Gruppe 27 betreffend Objektdaten des Anlageobjektes AO₁ erzeugt werden, wobei die Gruppen 25, 26, 27 jeweils zueinander korrelierende marktbezogene Daten d_{M} umfassen. Für die erste Gruppe 25, die zweite Gruppe 26 und die dritte Gruppe 27 werden jeweils mittels des KI-Moduls 2 entsprechende Bewertungsrechengänge durchgeführt, so dass ein erstes Teil-Bewertungsergebnis 28 für die erste Gruppe 25, ein zweites Teil-Bewertungsergebnis 29 für die Zweite Gruppe 26 und ein drittes Teil-Bewertungsergebnis 30 für die dritte Gruppe 27 berechnet wird. Aus diesen Teil-Bewertungsergebnissen 28, 29, 30 wird das erste Bewertungsergebnis 22 berechnet. Die Berechnung der ersten Teil-Bewertungsergebnisse 28, 29, 30 und/oder die Berechnung des ersten Bewertungsergebnisses 22 kann mittels einer ersten Gewichtungsvorschrift 31 bzw. zweiten Gewichtungsvorschrift 32 erfolgen, so dass bestimmte Kategoriewerte der Daten höher priorisiert werden als andere.

Nach einer nicht dargestellten alternativen Ausführungsform kann die erste Gewichtungsvorschrift 31 und/oder die zweite Gewichtungsvorschrift 32 auch weggelassen werden, wobei das Teil-Bewertungsergebnis 28, 29, 30 und/oder das Bewertungsergebnis 22 durch Bildung eines Durchschnitts (mathematischen Mittelwerts) ermittelt wird.

Die gleiche gruppierte Bewertung erfolgt auf Basis der von einem externen Informationsanbieter gelieferten zweiten marktbezogenen Daten, damit die dynamische Bewertung als das zweite Bewertungsergebnis 21 berechnet wird gemäß Figur 7. Es werden die gleichen Gruppen 25, 26, 27 ermittelt, lediglich mit dem Unterschied, dass die zweiten marktbezogenen Daten aktualisiert von externen Informationsanbietern stammen. Mit oder ohne der ersten Gewichtungsvorschrift 31 werden hieraus entsprechende erste Teil-Bewertungsergebnisse 33 bzw. zweite Teil-Bewertungsergebnisse 34 und dritte Teil-Bewertungsergebnisse 35 bestimmt, aus denen über die gegebenenfalls zweite Gewichtungsvorschrift 32 das zweite Bewertungsergebnis 24 bestimmt wird.

In Figur 8 sind die Ampeldarstellungen dieser Teil-Bewertungsergebnisse 28, 29, 30 der statischen Bewertung unter Anwendung der ersten marktbezogenen Daten und die Teil-Bewertungsergebnisse 33, 34, 35 der dynamischen Bewertung unter Anwendung der zweiten marktbezogenen Daten nebeneinander dargestellt.

Hieraus ist entnehmbar, dass die ersten Teil-Bewertungsergebnisse 28, 33 betreffend die Lage des Anlageobjekts AO₁ gleich sind unter Bildung eines grünen Signals.

Das dritte Teil-Bewertungsergebnis 30 der statischen Bewertung und das dritte Teil-Bewertungsergebnis 35 der dynamischen Bewertung unterscheiden sich, wobei das dritte Teil-Bewertungsergebnis 30 durch ein gelbes Ampelsignal und das dritte Teil-Bewertungsergebnis 35 durch ein grünes Ampelsignal dargestellt wird. Während die dynamische Bewertung ein grünes Signal zeigt, was bedeutet, dass die objektbezogenen Daten in Ordnung sind, zeigt die statische Bewertung ein gelbes Signal, was beispielsweise darauf zurückzuführen ist, dass der Nutzer bezüglich des Kategoriewertes "energetischer Zustand" die Angabe "schlecht" gemacht hat, während tatsächliche energetische Zustand gemäß der dynamischen Bewertung als "gut" zu bezeichnen ist.

Hinsichtlich der zweiten Gruppe 26 der marktbezogenen Daten unterscheidet sich im vorliegenden Ausführungsbeispiel die statische Bewertung von der dynamischen Bewertung. Während die statische Bewertung ein rotes Ampelsignal (zweites Teil-Bewertungsergebnis 29) anzeigt, zeigt die dynamische Bewertung eins gelbes Ampelsignal (zweites Teil-Bewertungsergebnis 34) an. Diese Diskrepanz kann beispielsweise darin begründet sein, dass der Nutzer bei Eingabe der ersten marktbezogenen Daten eine schlechtere Mieterbonität oder eine schlechtere Miethöhe angegeben hat als die zweiten marktbezogenen Daten aussagen, die in das zweite Teil-Bewertungsergebnis 34 der dynamischen Bewertung einfließen.

Vorteilhaft wird durch die gruppierte Anordnung von Teil-Bewertungsergebnissen 28, 29, 30; 33, 34, 35 dem Nutzer die Möglichkeit gegeben, einfach und themenbezogen festzustellen, auf Basis welcher gruppierten Kategoriewerte seine Informationsbasis von der aktuellen Informationsbasis, die durch die dynamische Bewertung vermittelt wird, abweicht. Hat der Nutzer beispielsweise ein Aktionssignal, wie beispielsweise ein rotes Signal der dynamischen Bewertung erhalten, kann dies den Nutzer beispielsweise dazu bewegen, das Anlageobjekt AO₁ zu verkaufen oder eine Renovierung durchzuführen, so dass mindestens ein Gewerk durch ein Handwerksunternehmen bearbeitet werden müsste. Hierzu ermöglicht das Rechnersystem mittels einer Applikationssoftware und mittels eines Anonymmoduls des Systems dem Nutzer die Möglichkeit, in Abhängigkeit von dem Bewertungsergebnis 24 das betreffende Anlageobjekt AO₁ auf einem Markplatz der Plattform anzubieten, d. h. bei Verkauf die entsprechend relevanten bestandsbezogenen Daten d_{B} oder marktbezogenen Daten d_{M} anonym, d. h. ohne Angabe persönlicher Daten des Nutzers, anzubieten. Über das Kommunikationsnetz kann eine Kommunikation mit interessierten Dritten erfolgen. Erst wenn ein Dritter beim geplanten Verkauf des Anlageobjektes AO₁ signifikantes Interesse, beispielsweise ein Kaufangebot, unterbreitet, auf das der Nutzer antworten will, werden mittels des Anonymmoduls die persönlichen Daten des Nutzers freigegeben, so dass der Dritte diese einsehen kann. Dies erfolgt spätestens zur Erlangung eines Vertragsabschlusses. Dasselbe gilt, wenn es sich bei dem Dritten um einen Dienstanbieter bzw. Handwerksunternehmen handelt, welches ernsthaft zu einem bestimmten Preis bereit ist, das Gewerk einer entsprechenden Dienstleistung auszuüben. Vorteilhaft erfolgt hierdurch eine gesteuerte Freigabe von personalisierten Daten des Nutzers erst bei Vertragsabschluss oder unmittelbar davor, so dass eine unerwünschte Kontaktaufnahme über weitere Kommunikationskanäle, wie beispielsweise Telefon etc., vermieden werden kann.

Nach einer alternativen Ausführungsform kann die Anzahl der Gruppen 25, 26, 27 auch weniger oder mehr als Drei betragen. Dies ist abhängig von der Anzahl der abzufragenden marktbezogenen Daten und/oder der gewünschten Korrelation zwischen den einzelnen marktbezogenen Daten und/oder Gruppen von marktbezogenen Daten, mithin also abhängig vom gewünschten Detailgrad und/oder Korrelationsgrad der abzufragenden marktbezogenen Daten.

Die verwendeten Begriffe "Ampelsignal", "Ampelfunktion", "Ampelsystem" und "Ampeldarstellungen" können als Synonym angesehen werden. Sie können jeweils durch den Begriff "Aktionssignal" oder "Bewertungssignal" ersetzt werden. Es sei angemerkt, dass es sich bei diesem Aktionssignal um ein Ampelsystem, Benotung, Sterne, aber auch andere Darstellungen oder Signalisierungen handeln kann.

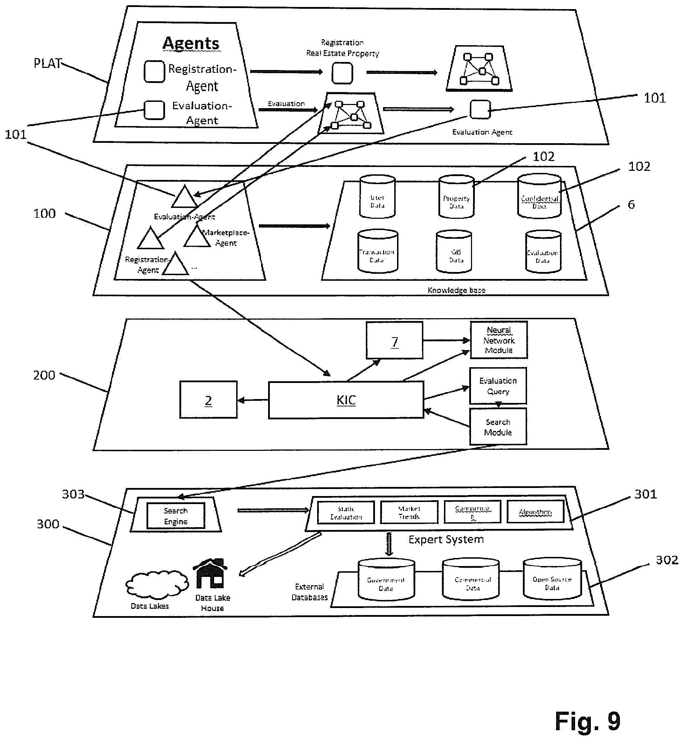

Eine zu Figur 1 alternative Struktur des erfindungsgemäßen Systems ist in Figur 9 dargestellt. Es handelt sich wie gemäß Figur 1 um ein Server-Computersystem mit mindestens einem Prozessor und einem Speicher, so dass die in gemäß Figur 9 dargestellten Schichten ablaufenden Prozesse verarbeitet werden können. Das Server-Computersystem umfasst eine Plattformebene PLAT, eine erste Wissensebene 100, eine zweite Wissensebene 200 und eine dritte Wissensebene 300. Die Ebenen unterscheiden sich in ihrer Funktion voneinander. Die Plattformebene PLAT kann als unterste Schicht angesehen werden. An diese schließt sich die erste Wissensebene 100 an, danach folgt die zweite Wissensebene 200 und als letztes die dritte Wissensebene 300. Ein Kommunikationsaustausch und/oder Datenaustausch und/oder eine Datenverbindung ist nur zwischen benachbarten Ebenen, also beispielsweise zwischen der Plattformebene PLAT und der ersten Wissensebene 100 oder der ersten Wissensebene 100 und der zweiten Wissensebene 200 oder der zweiten Wissensebene 200 und der dritten Wissensebene 300, erlaubt bzw. vorgesehen. Ein Datenaustausch oder Datenverbindung zwischen der ersten Wissensebene 100 und der dritten Wissensebene 300 besteht somit nicht.

Die Plattformebene PLAT dient zur Registrierung von Anlageobjekten. Sie weist das User Interface 11 und das Schnittstellenmodul 10 auf, so dass die Ergebnisse der Evaluierung in der Plattformebene für den Nutzer dargestellt werden kann. Insbesondere wird in der Plattformebene PLAT das aufgrund der Evaluierung erzeugte Bewertungssignal (Aktionssignal) F1, F2 dargestellt.

In der Plattformebene PLAT wird der Evaluations-Agent 80 angelegt, der als Evaluationsinstanz 101 in der ersten Wissensebene 100 die Verarbeitung der bestandsbezogenen Daten in dem statischen Bewertungsmodul 6 überwacht. Das statische Bewertungsmodul 6 weist eine Reihe von Speicher 102 auf, in denen beispielsweise Gewichtungsdaten, Nutzerdaten, Transaktionsdaten, Anlageobjektdaten sowie vertrauliche Daten abgelegt sind.

In der zweiten Wissensebene 200 ist das Künstliche-Intelligenz-Computersystem KIC, das KI-Modul 2 sowie ein neuronales Netz angeordnet. In dem Künstliche-Intelligenz-Computersystem KIC erfolgt die Verarbeitung der für die über die Evaluierungsinstanz 101 angefragten Bewertungsanfragen. Die in dem KI-Modul 2 durchgeführte Prüfung wird durch das Künstliche-Intelligenz-Computersystem KIC gesteuert und das Ergebnis unter Einschluss des Bewertungssignal in einem dynmaischen Bewertungsmodul 7 abgespeichert.

Die marktbezogenen Daten D_{M} werden mittels eines in der dritten Wissensebene 300 installierten Expertensystems 301 bereitgestellt. Hierzu erfolgt von der zweiten Wissensebene 200 zu der dritten Wissensebene 300 eine Suchanfrage in einem entsprechenden Suchanfragemodul 303, mittels dessen das Expertensystem 301 externe Datenspeicher 302 (Bigdata, DataLakes, DataLakeHouses) abgefragt. Die Ergebnisse werden dann zurück in die zweite Wissensebene 200 zu dem Künstliche-Intelligenz-Computersystem KIC übertragen und in dem dynamischen Bewertungsmodul 7 abgespeichert. Unter DataLake werden Daten aus verschiedenen externen Quellen verstanden, die in einem Rohformat in dem erfindungsgemäßen System abgelegt werden. Erst bei Abruf der Daten werden diese strukturiert und umformatiert.

Das in Figur 9 dargestellte Server-Computersystem dient zum automatischen Bereitstellen von Informationen über ein Anlageobjekt AO_{B1}, AO_{B2}...AO_{Bn}. Die in Figur 9 dargestellten Datenbanken zur Speicherung von Daten sind eine Ergänzung der in Figur 1 dargestellten Anlageobjekt-Datenbank 4 und der Benutzer-Datenbank 5. Das in Figur 1 dargestellte Immobilien-Informationsmodul 13 ist in dem Künstlichen-Intelligenz-Computersystem KIC integriert. Über die dritte Wissensebene 300 ist eine Vernetzung desselben mit externen Datenquellen gegeben, um marktbezogene Daten auszulesen und in dem KI-Modul 2 das Bewertungsergebnis zu ermitteln.

Das in der ersten Wissensebene 100 angeordnete statistische Bewertungsmodul 6 und das in der zweiten Wissensebene 200 angeordnete dynamische Bewertungsmodul 7 liefern die Bewertungsinformationen für die entsprechenden Anlageobjekte AO_{B1}, AO_{B2}...AO_{Bn}.

## Patentansprüche

1. Server-Computersystem umfassend:
- mindestens einen Prozessor,
- einen Speicher, der Anweisungen enthält, die, wenn sie von mindestens einem Prozessor ausgeführt werden, das Server-Computersystem zu folgendem veranlassen:
- automatisches Bereitstellen von Informationen über Anlageobjekte (AO_{B1}, AO_{B2}...AO_{Bn}), wobei Bewertungsinformationen bezüglich der Anlageobjekte (AO_{B1}, AO_{B2}...AO_{Bn}) aus einem statischen Bewertungsmodul (6) enthaltend Bewertungsinformationen auf Basis von bestandsbezogenen Daten und einem dynamischen Bewertungsmodul (7) enthaltend Bewertungsinformationen auf Basis von marktbezogenen Daten zusammengesetzt werden sowie
- ein Künstliches-Intelligenz-Computersystem (KIC) mit einem KI-Modul (2),
- mittels dessen eine Ähnlichkeitsprüfung (14) unter Kategorisierung der bestandsbezogenen Daten (d_{B}) und der marktbezogenen Daten (d_{M}) und eine Vergleichsprüfung (15) durchgeführt wird, so dass bei Überschreitung der Abweichung eines bewertungsrelevanten Kategoriewertes (Kat1, Kat2,... Katₙ) des einen Anlageobjektes (AO_{B1}) zu dem bewertungsrelevanten Kategoriewertes (Kat1, Kat2,... Katₙ) eines anderen Anlageobjektes (AO_{M2}) ein Bewertungssignal (F1, F2) erzeugt wird.

2. Server-Computersystem nach Anspruch 1, **dadurch gekennzeichnet, dass** eine erste Wissensebene (100), eine zweite Wissensebene (200) und eine dritte Wissensebene (300) vorgesehen sind,
- wobei in der ersten Wissensebene (100) als Komponenten das statische Bewertungsmodul (6) und eine Evaluierungsinstanz enthalten ist, die die in dem statischen Bewertungsmodul (6) enthaltenen Daten bewertet,
- wobei in der zweiten Wissensebene (200) als Komponenten das neuronale Netze verarbeitende Künstliche-Intelligenz-Computersystem (KIC), das dynamische Bewertungsmodul (7) sowie das KI-Modul (2) enthaltend sind, und dass das Künstliche-Intelligenz-Computersystem (KIC) mittels der Evaluierungsinstanz (101) der ersten Wissensebene (100) aktiviert wird,
- wobei in der dritten Wissensebene (300) als Komponenten ein Expertensystem (301) sowie externe Datenspeicher (302) enthalten sind, so dass in der zweiten Wissensebene (200) erzeugte Evaluierungssuchanfragen verarbeitet werden unter Bereitstellung von Daten für das Künstliche-Intelligenz-Computersystem (KIC), auf Basis dessen das Bewertungssignal (F1, F2) bestimmt wird.

3. Server-Computersystem nach Anspruch 1 oder 2, **dadurch gekennzeichnet, dass** eine Plattformebene (PLAT) vorgesehen ist, in der als Komponenten ein User Interface (11) und ein Schnittstellenmodul (10) vorgesehen sind.

4. Server-Computersystem nach einem der Ansprüche 1 bis 3, **dadurch gekennzeichnet, dass** die erste Wissensebene (100) und die zweite Wissensebene (200) und die dritte Wissensebene (300) derart ausgebildet sind, dass ein Datenaustausch und/oder ein Datentransfer nur zwischen den Komponenten der ersten Wissensebene (100) und der zweiten Wissensebene (200) einerseits und der zweiten Wissensebene (200) und der dritten Wissensebene (300) andererseits erfolgt.

5. Server-Computersystem nach einem der Ansprüche 1 bis 4, **dadurch gekennzeichnet, dass** der die Plattformebene (PLAT) und die erste Wissensebene (100) derart ausgebildet sind, dass ein Datenaustausch und/oder ein Datentransfer nur zwischen den Komponenten der Plattformebene (PLAT) und der ersten Wissensebene (100) erfolgt.

6. Server-Computersystem nach einem der Ansprüche 1 bis 5, **dadurch gekennzeichnet, dass** die bestandsbezogenen Daten (d_{B}) und die marktbezogenen Daten (d_{M}) jeweils als zu den Anlageobjekten (AO_{B1}, AO_{B2}...AO_{Bn}) eines Immobilienportfolios und Anlageobjekten (AO_{M1}, AO_{M2},...AO_{Mn}) eines externen Immobilienmarktes zugewiesene Vektoren (V1, V2...Vₙ; V1', V2'...Vₙ') zusammengefasst sind, wobei die Vektoren jeweils eine Anzahl von gleichen Kategorien (Kat1, Kat2,... Katₙ) zugeordneten Kategoriewerten aufweisen

7. Server-Computersystem nach einem der Ansprüche 1 bis 6, **dadurch gekennzeichnet, dass** sich die Vergleichsprüfung (15) lediglich auf bewertungsrelevante Kategoriewerte (Kat1, Kat2,... Katₙ) bezieht, insbesondere Kategoriewerte wie Mietpreis, Kaufpreis.

8. Server-Computersystem nach einem der Ansprüche 1 bis 7, **dadurch gekennzeichnet, dass** die Vergleichsprüfung (15) einen Schwellwert (S_{P}) oder einen Schwellwertbereich umfasst, zu dem die Abweichung zwischen zwei Kategoriewerten (Kat1, Kat2,... Katₙ) unterschiedlicher Vektoren (V1, V2...Vₙ; V1', V2'...Vₙ') in Beziehung gesetzt wird, um das Aktionssignal (F1, F2) zu bestimmen.

9. Server-Computersystem nach einem der Ansprüche 1 bis 8, **dadurch gekennzeichnet, dass** der Schwellwert (S_{P}) oder ein Schwellwertbereich mit einem vorgegebenen Gewichtungsfaktor voreinstellbar ist, wobei der Gewichtungsfaktor abhängig ist von einer Portfoliostrategievorgabe.

10. Server-Computersystem nach einem der Ansprüche 1 bis 9, **dadurch gekennzeichnet, dass** Steuermittel vorgesehen sind, derart, dass das Bewertungssignal (F1, F2) zur Bildung eines Bewertungsampelsymbols (16) dient, wobei in Abhängigkeit von der Farbe des Ampelsymbols eine Handlungsempfehlung oder eine Nichthandlungsempfehlung signalisiert wird.

11. Verfahren zum Bewerten von Anlageobjekten (AO₁, AO₂,...AOₙ), wobei in einem Rechnersystem ein Bewertungsergebnis in Abhängigkeit von bestandsbezogenen Daten (d_{B}) des Anlageobjektes (AO₁, AO₂,...AOₙ), die sich aus zeitlich unveränderlichen Informationen zusammensetzen, und von marktbezogenen Daten (d_{M}), die sich aus zeitlich veränderlichen Informationen zusammensetzen, des Anlageobjektes (AO₁, AO₂,...AOₙ) ermittelt wird, **dadurch gekennzeichnet,**
- **dass** in einem ersten Schritt die bestandsbezogenen Daten (d_{B}) in das Rechnersystem eingegeben und verarbeitet werden,
- **dass** in einem zweiten Schritt erste marktbezogene Daten (d_{M}) ohne Nutzung eines externen Informationsanbieters in das Rechnersystem eingegeben werden und von demselben verarbeitet werden, wobei ein erstes Bewertungsergebnis (22) unter optionaler Gewichtung der einzelnen bestandsbezogenen Daten (d_{B}) und ersten marktbezogenen Daten (d_{M}) ermittelt wird,
- **dass** in einem dritten Schritt die zu dem ersten Bewertungsergebnis (22) führenden bestandsbezogenen Daten (d_{B}) und zweite marktbezogene Daten (d_{M}) unter Nutzung des externen Informationsanbieters (13) in dem Rechnersystem verarbeitet werden, wobei ein zweites Bewertungsergebnis (24) unter Vergleich der ersten marktbezogenen Daten (d_{M}) und der zweiten marktbezogenen Daten ermittelt wird.

12. Verfahren nach Anspruch 11, **dadurch gekennzeichnet, dass** die bestandsbezogenen Daten (d_{B}) und die ersten marktbezogenen Daten (d_{M}) und die zweiten marktbezogenen Daten (d_{M}) in Gruppen (25, 26, 27) von Daten unterteilt werden, wobei für die Gruppen (25, 26, 27) von Daten jeweils ein Bewertungsergebnis (22, 24) bestimmt wird.

13. Verfahren nach Anspruch 11 oder 12, **dadurch gekennzeichnet, dass** die für die Gruppen (25, 26, 27) von Daten jeweils Teil-Bewertungsergebnisse entsprechend einer Gewichtungsvorschrift (31, 32) bestimmt werden und dass aus den Teil-Bewertungsergebnissen (28, 29, 30; 33, 34, 35) aller Gruppen (25, 26, 27) von Daten das Bewertungsergebnis (22, 24) berechnet wird.

14. Verfahren nach einem der Ansprüche 11 bis 13, **dadurch gekennzeichnet, dass** das erste Bewertungsergebnis (22) und das zweite Bewertungsergebnis (24) in Form eines Ampelsymbols angezeigt wird, mittels dessen eine das Anlageobjekt betreffendes Aktionssignal (F1, F2) erzeugt wird.

15. Plattform für die Bewertung von Anlageobjekten (AO₁, AO₂,...AOₙ) nach einem Verfahren der Ansprüche 12 bis 16 mit einem Ausgabemittel, so dass die Bewertungsergebnisse mit einer Mehrzahl von Teil-Bewertungsergebnissen (28, 29, 30; 33, 34, 35) aus Gruppen (25, 26, 27) zusammengefasster bestandsbezogener und marktbezogener Daten (d_{B}, d_{M}) angezeigt werden, wobei in den Gruppen (25, 26, 27) jeweils unterschiedliche marktbezogene Daten (d_{M}) unter Bildung einer optional ersten Gewichtungsvorschrift (31) enthalten sind, und dass Rechenmittel vorgesehen sind, so dass jeweils aus den Gruppen (25, 26, 27) von Daten ermittelten Teil-Bewertungsergebnissen (28, 29, 30; 33, 34, 35) entsprechend einer zweiten Gewichtungsvorschrift (32) das Bewertungsergebnis (22, 24) berechnet und durch die Ausgabemittel angezeigt wird.
